# EUROPÄISCHE PATENTSCHRIFT

(11) **EP 3 048 414 B1**
(45) Veröffentlichungstag und Bekanntmachung des Hinweises auf die Patenterteilung: **20.12.2017**
(21) Anmeldenummer: 15151723.2
(22) Anmeldetag: 20.01.2015
(51) Int. Cl.: G01B 11/06, G01B 11/12

(54) **Prüfanlage und Verfahren zum Untersuchen eines Hohlkörpers**
Inspection system and method for examining a hollow body
Installation de contrôle et procédé d'analyse d'un corps creux

(43) Veröffentlichungstag der Anmeldung: 27.07.2016
(73) Patentinhaber: Sturm Maschinen- & Anlagenbau GmbH, 94330 Salching (DE)
(72) Erfinder: Aufschläger, Gerhard, 94447 Plattling (DE); Ullrich, Wolfgang, 82319 Starnberg (DE); Bader, Florian, 82380 Peissenberg (DE); Kesting, Marc, 94315 Straubing (DE); Völlinger, Ralf, 94315 Straubing (DE)
(74) Vertreter: Wunderlich, Rainer

(56) Entgegenhaltungen:
- EP-A1- 2 261 594
- GB-A- 2 436 618
- US-A- 4 872 269
- US-A1- 2007 139 059

## Beschreibung

Die vorliegende Erfindung bezieht sich in einem ersten Aspekt auf eine Prüfanlage zum Untersuchen eines Hohlkörpers, insbesondere einer Zylinderbohrung in einem Motorblock, nach dem Oberbegriff des Anspruchs 1.

In einem zweiten Gesichtspunkt betrifft die Erfindung ein entsprechendes Verfahren zum Untersuchen eines Hohlkörpers, insbesondere einer Zylinderbohrung in einem Motorblock, nach dem Oberbegriff des Anspruchs 14.

Ein solcher Motorblock kann für Verbrennungsmotoren, beispielsweise von Kraftfahrzeugen, verwendet werden. Er umfasst mehrere Zylinderbohrungen, deren Abmessungen und Wandeigenschaften präzise Vorgaben erfüllen sollen, um eine möglichst hohe Effizienz des Verbrennungsmotors zu gewährleisten. Unter einer Zylinderbohrung kann vorliegend allgemein ein zylinderförmiger Hohlraum mit rundem, insbesondere kreisförmigem, Querschnitt verstanden werden.

Oftmals wird auf die Innenwandung einer Zylinderbohrung eine Beschichtung aufgetragen. Diese muss bestimmte Vorgaben, insbesondere hinsichtlich ihrer Schichtdicke, möglichst exakt erfüllen.

Die Eigenschaften solch eines Hohlkörpers und/oder der aufgetragenen Beschichtung können mit einer gattungsgemäßen Prüfanlage untersucht werden. Eine gattungsgemäße Prüfanlage zum Untersuchen eines Hohlkörpers, insbesondere einer Zylinderbohrung in einem Motorblock, umfasst:
- eine Messvorrichtung, welche einen länglichen Körper und mehrere Sensoren aufweist, die mit dem Körper verbunden und zum Durchführen einer Abstandsmessung eingerichtet sind, und
- elektronische Steuermittel, welche dazu eingerichtet sind, die Messvorrichtung, das heißt den länglichen Körper und die damit verbundenen Sensoren, in einen zu untersuchenden Hohlkörper einzufahren, woraufhin die Sensoren Abstandsmessdaten bezüglich ihres Abstands zu einer Innenwandung des Hohlkörpers aufnehmen, und auf Grundlage der Abstandsmessdaten der Sensoren einen Innendurchmesser des Hohlkörpers zu bestimmen.

Bei einem gattungsgemäßen Verfahren zum Untersuchen eines Hohlkörpers, insbesondere einer Zylinderbohrung in einem Motorblock, ist eine Messvorrichtung vorgesehen, welche einen länglichen Körper und mehrere Sensoren umfasst, die mit dem Körper verbunden und zum Durchführen einer Abstandsmessung eingerichtet sind. Das Verfahren umfasst die Schritte, dass die Messvorrichtung in einen zu untersuchenden Hohlkörper eingefahren wird, dort eine Abstandsmessung zu einer Innenwandung des Hohlkörpers durchführt und auf Grundlage von hierbei aufgenommenen Abstandsmessdaten der Sensoren ein Innendurchmesser des Hohlkörpers bestimmt wird.

Eine Prüfanlage zum Untersuchen eines Hohlkörpers, auf dessen Innenwandungen eine Beschichtung aufgetragen wird, ist aus DE 199 34 991 A1 bekannt. Zudem werden eine gattungsgemäße Prüfanlage und ein entsprechendes Verfahren von der Anmelderin in der noch nicht veröffentlichten europäischen Patentanmeldung mit der Anmeldenummer 14 172 886 beschrieben.

Weitere Vorrichtungen und Verfahren zum Prüfen eines zylindrischen Hohlkörpers sind aus GB 2 436 618 A und US 4,872,269 bekannt. Bei diesen Vorrichtungen sind taktile Sensoren zum Untersuchen des Hohlkörpers vorgesehen.

Aus US 2007/0139059 A1 und EP 2 261 594 A1 sind starre Messsysteme zum Untersuchen eines Hohlkörpers bekannt, die im Inneren des zu überprüfenden Hohlkörpers bewegt werden, um eine Vielzahl von Messdaten zu erzeugen.

Es ist wünschenswert, dass möglichst beliebige Hohlkörper oder Motorblöcke mit derselben Prüfanlage und dem Verfahren untersucht werden können. Dies ist besonders erschwert, wenn sich verschiedene Hohlkörper in ihren Abmessungen stark unterscheiden.

Als eine **Aufgabe** der Erfindung kann angesehen werden, eine Prüfanlage und ein Verfahren anzugeben, mit denen Hohlkörper verschiedener Abmessungen möglichst präzise untersuchen werden können.

Diese Aufgabe wird durch die Prüfanlage mit den Merkmalen des Anspruchs 1 und durch das Verfahren mit den Merkmalen des Anspruchs 14 gelöst.

Vorteilhafte Varianten der erfindungsgemäßen Prüfanlage und des erfindungsgemäßen Verfahrens sind Gegenstand der abhängigen Ansprüche und werden außerdem in der folgenden Beschreibung erläutert.

Bei der Prüfanlage der oben genannten Art ist erfindungsgemäß vorgesehen, dass zum Untersuchen von Hohlkörpern unterschiedlicher Durchmesser zumindest ein Anteil der Sensoren als bewegbare Sensoren gestaltet ist, welche relativ zum länglichen Körper der Messvorrichtung bewegbar sind. Die elektronischen Steuermittel sind dazu eingerichtet, abhängig von einem zu untersuchenden Hohlkörper eine Messposition der bewegbaren Sensoren relativ zum länglichen Körper zu wählen. Außerdem ist eine Kalibrierstation vorgesehen und die elektronischen Steuermittel sind dazu eingerichtet, einen Kalibriervorgang für die bewegbaren Sensoren an der Kalibrierstation durchzuführen.

Bei dem Verfahren der oben genannten Art ist erfindungsgemäß zum Untersuchen von Hohlkörpern unterschiedlicher Durchmesser zumindest ein Anteil der Sensoren als bewegbare Sensoren gestaltet, welche relativ zum länglichen Körper der Messvorrichtung bewegbar sind. Abhängig von einem zu untersuchenden Hohlkörper wird eine Messposition der bewegbaren Sensoren relativ zum länglichen Körper gewählt.

Zudem kann vorzugsweise ein Kalibriervorgang für die bewegbaren Sensoren an der Kalibrierstation durchgeführt werden.

In dem Kalibriervorgang kann insbesondere vorgesehen sein, dass:
- die Messvorrichtung zu einer Kalibrierstation bewegt wird,
- die bewegbaren Sensoren auf eine bestimmte Referenzmessposition relativ zum länglichen Körper bewegt werden,
- mit den bewegbaren Sensoren in der Referenzmessposition eine Referenzmessung durchgeführt wird, mit welcher Entfernungen zur Kalibrierstation gemessen werden, und
- ein Zusammenhang zwischen vorab bekannten Abmessungen der Kalibrierstation und Messdaten der Referenzmessung ermittelt und gespeichert wird.

Der so ermittelte Zusammenhang kann nun für die genannte Bestimmung des Innendurchmessers eines zu untersuchenden Hohlkörpers auf Grundlage der Abstandsmessdaten der Sensoren verwendet werden.

Prinzipiell ist die Reihenfolge des Kalibriervorgangs und der Prüfmessung, das heißt der Abstandsmessung zu einer Innenwandung eines zu überprüfenden Hohlkörpers, beliebig. Es ist zweckmäßig, aus den Abstandsmessdaten erst dann den Durchmesser zu berechnen, wenn ein Kalibriervorgang durchgeführt worden ist. Vorzugsweise erfolgt der Kalibriervorgang vor der Prüfmessung, so dass direkt mit der Abstandsmessung zu einem Hohlkörper der zugehörige Innendurchmesser berechnet werden kann.

Sensoren können je nach Bauart einen kleinen Messbereich haben. Beispielsweise können bestimmte Sensoren eine Entfernung nur in einem bestimmten Entfernungsintervall präzise ermitteln. Je nach Innendurchmesser eines zu untersuchenden Hohlraums kann es daher eintreten, dass ein Abstand der Sensoren zu Innenwandungen des Hohlraums außerhalb des Messbereichs der Sensoren liegt. Um dennoch diesen Abstand präzise messen zu können, sind gemäß einem Kerngedanken der Erfindung nicht alle Sensoren starr mit dem länglichen Körper der Messvorrichtung verbunden. Vielmehr sind zumindest einige der Sensoren radial nach außen verstellbar. Nach Einfahren der Messvorrichtung in einen zu untersuchenden Hohlkörper können demnach die beweglichen Sensoren in Richtung der Innenwandungen des Hohlkörpers verstellt werden. Dadurch kann der Abstand der beweglichen Sensoren zur Innenwandung des Hohlkörpers so verändert werden, dass er innerhalb eines gewünschten Entfernungsintervalls liegt, in welchem die Sensoren präziser messen können.

Zu diesem Zweck sind die bewegbaren Sensoren in radialer Richtung zum länglichen Körper verstellbar, insbesondere ausklappbar oder -fahrbar. Die radiale Richtung kennzeichnet dabei eine Richtung senkrecht zur Längsachse des länglichen Körpers. Ein Ausfahrvorgang der bewegbaren Sensoren kann entweder eine Bewegungskomponente in radialer Richtung umfassen oder ausschließlich in radialer Richtung erfolgen.

Indem mehrere bewegbare Sensoren verwendet werden, kann aus den jeweiligen Abstandsmessungen ein Durchmesser des zu untersuchenden Hohlkörpers, das heißt ein Innendurchmesser eines Hohlraums im Hohlkörper, berechnet werden.

Wenn die bewegbaren Sensoren mindestens drei Sensoren umfassen, deren Messrichtung in Azimutalrichtung zueinander versetzt ist, muss die Messvorrichtung nicht exakt entlang der Mittelachse des zu untersuchenden Hohlraums- oder -körpers in diesen eingefahren werden. Der Durchmesser kann vielmehr auch bei einem Versatz der Messvorrichtung von der Mittelachse präzise ermittelt werden. Beispielsweise können drei Sensoren vorgesehen sein, deren Ausrichtung zueinander jeweils 120° um eine Längsachse des länglichen Körpers gedreht ist.

Bei einer bevorzugten Verfahrensvariante werden die bewegbaren Sensoren für eine Überprüfung einer Innenwandung des Hohlkörpers von dem länglichen Körper weg bewegt, während die Messvorrichtung in den zu untersuchenden Hohlkörper eingefahren ist. Hingegen sind die bewegbaren Sensoren zum länglichen Körper hin eingezogen, während die Messvorrichtung in einen zu untersuchenden Hohlkörper eingefahren oder aus einem zu untersuchenden Hohlkörper herausgefahren wird. Dadurch wird das Risiko verringert, dass die Sensoren ungewollt mit dem zu untersuchenden Hohlkörper kollidieren. Gleichwohl kann der für den Messvorgang erforderliche verhältnismäßig geringe Abstand zum Hohlkörper erreicht werden.

Bevorzugt sind die elektronischen Steuermittel dazu eingerichtet, unter Berücksichtigung eines erwarteten Innendurchmessers des zu untersuchenden Hohlkörpers eine Messposition festzulegen, auf welche die bewegbaren Sensoren für eine Abstandsmessung bewegt werden. Der erwartete Innendurchmesser kann beispielsweise ein vorgegebener Nennwert sein. Die bewegbaren Sensoren werden hier also für Hohlkörper mit unterschiedlich großem Innendurchmesser nicht in dieselbe Messposition gebracht. Vielmehr werden die Sensoren bei großem Innendurchmesser weiter ausgefahren als bei kleinem Innendurchmesser.

Damit eine Bestimmung des Innendurchmessers präzise möglich ist, muss die Strecke, um welche die bewegbaren Sensoren verstellt werden, möglichst exakt berücksichtigt werden. Über zahlreiche Bewegungsvorgänge der Sensoren hinweg können jedoch Abweichungen in einer Positionseinstellung der Sensoren eintreten. Eine Messposition der bewegbaren Sensoren ist auch verhältnismäßig ungenau bekannt, wenn von einer bisherigen (insbesondere präzise bekannten) Messposition der Sensoren zu einer anderen Messposition gewechselt wird; dies kann beispielsweise vorkommen, wenn die Untersuchung mehrerer Hohlkörper eines bestimmten Innendurchmessers abgeschlossen ist und sodann zur Untersuchung anderer Hohlkörper mit einem anderen Innendurchmesser fortgeschritten wird.

Ein wesentlicher Gedanke der Erfindung zielt darauf ab, einen Innendurchmesser eines Hohlkörpers auch dann präzise ermitteln zu können, wenn die Messposition der bewegbaren Sensoren nicht exakt bekannt ist. Die bewegbaren Sensoren können zwar reproduzierbar auf eine bestimmte Messposition relativ zum länglichen Körper der Messvorrichtung bewegt werden, diese Messposition ist aber nicht genau bekannt. Wird ein falscher Wert für die Messposition angenommen, hätte dies direkte Auswirkungen auf den damit berechneten Innendurchmesser des Hohlkörpers.

Um dies zu vermeiden, wird erfindungsgemäß eine Kalibrier- oder Referenzmessung durchgeführt. Dabei werden die bewegbaren Sensoren auf eine Referenzmessposition gebracht. Diese bezeichnet eine Position der bewegbaren Sensoren relativ zum länglichen Körper der Messvorrichtung. Die Referenzmessposition kann insbesondere gleich derjenigen Messposition der bewegbaren Sensoren relativ zum länglichen Körper sein, in welcher nach Durchführen des Kalibriervorgangs ein Hohlkörper untersucht wird. Somit kann eine Referenzmessung durchgeführt werden, bei welcher die bewegbaren Sensoren relativ zum länglichen Körper gleich angeordnet sind wie bei einer Messung eines zu untersuchenden Hohlkörpers.

Durch die Referenzmessung werden Entfernungen zu einer Kalibrierstation ermittelt. Die Kalibrierstation kann beispielsweise die Form eines Hohlzylinders umfassen. Aus den Messdaten der Referenzmessung kann sodann ein Durchmesser des Hohlzylinders der Kalibrierstation abgeleitet werden. Der abgeleitete (gemessene) Durchmesser wird sodann mit dem bekannten Wert des Durchmessers des Hohlzylinders der Kalibrierstation verglichen. Der Zusammenhang zwischen diesen Daten wird abgespeichert und als Kalibrierung genutzt. Das heißt, aus folgenden Abstandsmessdaten der bewegbaren Sensoren wird unter Berücksichtigung des vorgenannten Zusammenhangs ein Innendurchmesser des untersuchten Hohlkörpers berechnet.

Als wesentlicher Vorgang dieser Maßnahmen können die bewegbaren Sensoren auf prinzipiell beliebige verschiedene Messpositionen gebracht werden, ohne dass in aufwändiger Weise die Position der bewegbaren Sensoren gemessen werden müsste.

Es ist zweckmäßig, wenn die Kalibrierstation mindestens eine kreisförmige Öffnung, entsprechend einem Hohlzylinder, aufweist, in welche die Messvorrichtung für den Kalibriervorgang eingefahren wird. Es kann bevorzugt sein, dass die Kalibrierstation zumindest einen Referenzring umfasst, in welchen die Messvorrichtung eingefahren wird. Der Referenzring oder die Referenzringe können mit einer Halterung in einer definierten Position gehalten sein. Dies ermöglicht ein einfaches Wechseln oder Hinzufügen eines Referenzrings mit einem bestimmten Innendurchmesser.

Für eine größere Flexibilität kann die Kalibrierstation mehrere Referenzringe umfassen, die sich in ihrem Innendurchmesser unterscheiden. Die Referenzringe können insbesondere konzentrisch aufeinander angeordnet sein. Für die Kalibriermessung kann ein Innendurchmesser von einem der Referenzringe bestimmt werden. Dabei kann derjenige Referenzring ausgewählt werden, dessen Innendurchmesser dem des darauf oder zuvor untersuchten Hohlkörpers am nächsten kommt. In anderen Worten können die elektronischen Steuermittel dazu eingerichtet sein, einen der Referenzringe abhängig vom erwarteten Innendurchmesser des zu untersuchenden Hohlkörpers auszuwählen.

Vorzugsweise wird der Kalibriervorgang automatisch dann ausgeführt, wenn von überprüften Hohlkörpern einer bestimmten Größe auf zu überprüfende Hohlkörper einer anderen Größe gewechselt wird. Hierfür können die elektronischen Steuermittel dazu eingerichtet sein, den Kalibriervorgang zumindest immer dann auszuführen, wenn ein nächster Hohlkörper mit einer anderen Messposition untersucht werden soll als ein vorhergehender Hohlkörper. In dieser Situation werden die Sensoren relativ zum länglichen Körper in eine andere Messposition gebracht als bei der Untersuchung des vorhergehenden Hohlkörpers.

Die Referenzmessposition für den Kalibriervorgang kann gleich der Messposition für den nächsten Hohlkörper gewählt werden. Dadurch ist die Kalibrierung geeignet für die folgende Messung. Es kann auch alternativ oder ergänzend ein Kalibriervorgang durchgeführt werden, bei dem die Referenzmessposition gleich der Messposition ist, die beim vorhergehenden Hohlkörper verwendet wurde. Die hierdurch mögliche Kalibrierung wird zweckmäßigerweise zur Berechnung des Innendurchmessers des vorhergehenden Hohlkörpers verwendet, nicht für die Berechnung des Innendurchmessers des nächsten Hohlkörpers, für den eine andere Messposition verwendet wird.

Zusätzlich oder alternativ können die elektronischen Steuermittel weiterhin dazu eingerichtet sein, den Kalibriervorgang zumindest immer nach einer vorgebbaren Zeit und/oder einer vorgebbaren Anzahl untersuchter Hohlkörper durchzuführen. Dadurch wird eine gleichbleibend hohe Messgenauigkeit auch bei einer großen Anzahl zu überprüfender Hohlkörper gewährleistet.

Die Erfindung betrifft zudem eine Beschichtungsanlage zur Beschichtung einer Innenwandung eines Hohlkörpers, insbesondere einer Lauffläche einer Zylinderbohrung in einem Motorblock. Die Beschichtungsanlage umfasst mindestens eine drehbare Beschichtungslanze, durch welche ein Metallplasmastrahl zur Beschichtung der Innenwandung erzeugbar ist, und eine erfindungsgemäße Prüfanlage. Durch eine Innendurchmesserermittlung mittels der Prüfanlage kann einerseits eine aufgetragene Beschichtung überprüft werden. Andererseits können durch eine solche Messung vor Auftragen der Beschichtung Informationen gewonnen werden, die für den Beschichtungsvorgang nützlich sein können. Außerdem kann mit Hilfe der Prüfanlage eine Dicke einer Beschichtung ermittelt werden.

Hierzu wird mit Hilfe der Messvorrichtung ein Innendurchmesser des Hohlkörpers vor und nach Auftragen einer Beschichtung auf eine Innenwandung des Hohlkörpers ermittelt. Eine Dicke der Beschichtung kann sodann berechnet werden durch Vergleichen, insbesondere Berechnen der Differenz, der ermittelten Innendurchmesser vor und nach Auftragen der Beschichtung.

Diese Verfahrensschritte können bei einer Ausführung der erfindungsgemäßen Beschichtungsanlage dadurch realisiert werden, dass die elektronischen Steuermittel dazu eingerichtet sind,
- mit Hilfe der Messvorrichtung einen Innendurchmesser des Hohlkörpers zu ermitteln,
- sodann mit der Beschichtungslanze eine Beschichtung auf eine Innenwandung des Hohlkörpers aufzutragen,
- darauf mit Hilfe der Messvorrichtung einen Innendurchmesser des nun beschichteten Hohlkörpers zu ermitteln,
- eine Dicke der Beschichtung durch Vergleichen der ermittelten Innendurchmesser vor und nach Auftragen der Beschichtung zu berechnen.

Die geschilderten Beschreibungen zum Überprüfen und Bestimmen eines Innendurchmessers eines Hohlkörpers sind ebenfalls auf Hohlkörper mit mehreren zu überprüfenden Hohlräumen oder Zylinderbohrungen anzuwenden. In diesem Fall gelten die Beschreibungen separat für jeden Hohlraum des Hohlkörpers.

Ein Drehen der Messvorrichtung innerhalb einer Zylinderbohrung des Hohlkörpers ist in der Regel nicht erforderlich, wenn mindestens drei Sensoren zur Abstandsmessung verwendet werden.

Die als zusätzliche Vorrichtungsmerkmale beschriebenen Eigenschaften der Erfindung sind auch als Varianten des erfindungsgemäßen Verfahrens aufzufassen, und umgekehrt.

Als bewegbare abstandsmessende Sensoren werden optische Sensoren eingesetzt, insbesondere Triangulationssensoren oder Konfokalsensoren.

Als separater Erfindungsgedanke kann auch eine Prüfanlage aufgefasst werden, welche die Merkmale des Anspruchs 1 bis auf die Kalibrierstation und die Gestaltung der elektronischen Steuerungsmittel zum Durchführen des Kalibriervorgangs umfasst. Eine solche Prüfanlage bietet insbesondere den Vorteil, dass durch die bewegbaren Sensoren Zylinderbohrungen unterschiedlicher Durchmesser präzise vermessen werden können.

Weitere Vorteile und Merkmale der Erfindung werden nachstehend mit Bezug auf die beigefügte schematische Figur beschrieben.

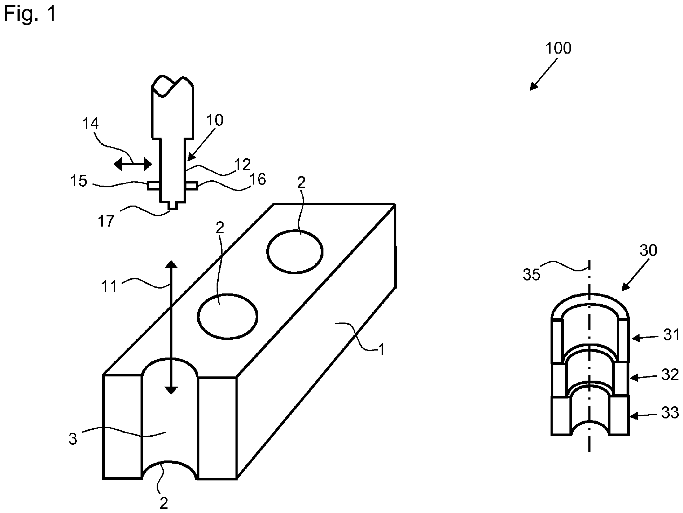

- Fig. 1: zeigt eine schematische Darstellung eines Ausführungsbeispiels einer erfindungsgemäßen Prüfanlage und eines zu untersuchenden Hohlkörpers.

In Fig. 1 ist schematisch ein Ausführungsbeispiel einer erfindungsgemäßen Prüfanlage 100 und eines zu untersuchenden Hohlkörpers 1 dargestellt.

Die Prüfanlage 100 umfasst eine Messvorrichtung 10 zum Untersuchen eines Hohlkörpers 1, eine hier nicht dargestellte Haltevorrichtung für den momentan zu untersuchenden Hohlkörper 1 und eine Kalibrierstation 30 für die Messvorrichtung 10.

Ein zu untersuchender oder überprüfender Hohlkörper 1 kann beispielsweise ein Motorblock mit mehreren Zylinderbohrungen 2 sein. Zu überprüfen sind dabei Eigenschaften der Zylinderbohrungen 2, insbesondere der Durchmesser der jeweiligen Zylinderbohrung 2.

Hierfür wird eine Messvorrichtung 10 eingesetzt, welche einen länglichen Körper 12 und damit verbundene Sensoren 15, 16, 17 umfasst.

Durch den länglichen Körper 12 kann die Messvorrichtung 10 in die Zylinderbohrungen 2 eingefahren werden. In der Figur ist diese Bewegung durch den Doppelpfeil 11 in Achsrichtung der Zylinderbohrung 2 verdeutlicht. Ein Durchmesser des länglichen Körpers 12 ist hierzu zweckmäßigerweise kleiner als die Durchmesser der Zylinderbohrungen 2, wobei die Länge des länglichen Körpers 12 größer sein kann.

Die Sensoren 15, 16, 17 oder Komponenten von diesen können indirekt oder direkt mit dem länglichen Körper 12 verbunden sein. Beispielsweise können einige oder sämtliche der Sensoren über optische Fasern verfügen, welche am länglichen Körper geführt sind und über welche Messlicht ausgesendet und/oder empfangen werden kann.

Der Sensor 17 kann zur Aufnahme eines Rundumbilds gestaltet sein, wozu er Licht aus einem 360°-Bereich empfangen kann. Hierzu kann ein zur Längsachse des länglichen Körpers 12 schräg gestellter Spiegel oder ein schräg gestelltes Prisma verwendet werden, welches rotationssymmetrisch zur Längsachse ist. Dadurch kann Licht aus einem 360°-Bereich um die Längsachse weiter in Richtung einer Kamera oder eines sonstigen Lichtempfängers des Sensors 17 geleitet werden.

Mit einem solchen Sensor 17 können Eigenschaften einer Innenwandung 3 eines Hohlzylinders überprüft werden, insbesondere die Rauigkeit oder Materialeigenschaften, die sich auf eine Farbe der Innenwandung 3 auswirken.

Zur Messung eines Durchmessers der Zylinderbohrung 2 werden insbesondere die Sensoren 15, 16 verwendet. Dabei sind mindestens drei, vorzugsweise genau drei, gleichartige Sensoren 15, 16 vorhanden, von denen für eine leichtere Darstellung zwei in der Figur gezeigt sind. Die Sensoren 15, 16 messen jeweils einen Abstand zur Innenwandung 3 der Zylinderbohrung 2. Durch Kenntnis der Abmessungen der Messvorrichtung 10 kann aus den gemessenen Abständen/Entfernungen der Durchmesser berechnet werden.

Sofern die Messvorrichtung 10 exakt auf der Längsachse der Zylinderbohrung 2 in diese eingefahren wird, würde bereits ein Sensor 15 mit einer Abstandsmessung ausreichen, um den Durchmesser präzise zu ermitteln. Praktisch können aber Abweichungen der Messvorrichtung 10 von der Längsachse der Zylinderbohrung 2 nicht vermieden werden. Der Durchmesser kann dennoch mit hoher Genauigkeit bestimmt werden, wenn drei Sensoren 15, 16 vorhanden sind, die in verschiedenen Richtungen den Abstand messen.

Eine bevorzugte Anwendung der Durchmesserermittlung mittels der Messvorrichtung 10 liegt in einer Dickenbestimmung einer Beschichtung der Innenwandung 3 eines Hohlzylinders 2. Hierzu wird ein Durchmesser vor und nach Auftragen einer Beschichtung gemessen. Die Differenz dieser Durchmesserwerte ergibt die Dicke der aufgetragenen Beschichtung. Für aussagekräftige Ergebnisse einer verhältnismäßig dünnen Schicht müssen die Abstandsmessungen mit größter Genauigkeit erfolgen.

Die gegenwärtig hierzu verfügbaren Sensoren haben einen stark beschränkten Messbereich, so dass die Sensoren 15, 16 auf einen Abstand zur Innenwandung 3 bewegt werden müssen, der innerhalb ihres Messbereichs liegt. Weil die Durchmesser verschiedener Zylinderbohrungen 2 unterschiedlich sein können (beispielsweise je nach Motormodell) und um Zusammenstöße der Sensoren 15, 16 mit dem Hohlkörper 1 zu vermeiden, sind die Sensoren 15, 16 bewegbar gestaltet. Sie können quer zur Längsachse des länglichen Körpers 12 ausgefahren werden, das heißt in Richtung des Doppelpfeils 14 in Figur 1, bis ihr Abstand zur Innenwandung 3 innerhalb ihres Messbereichs liegt. Die Position der bewegbaren Sensoren 15, 16, in welcher eine Abstandsmessung zur Innenwandung 3 erfolgt, wird vorliegend als Messposition bezeichnet und bezieht sich auf die Position relativ zum länglichen Körper 12.

Damit durch solche Abstandsmessungen ein Durchmesser präzise ermittelt werden kann, muss die Messposition der Sensoren 15, 16 möglichst präzise bekannt sein.

Weicht eine tatsächliche Messposition von einer angenommenen Messposition ab, wirkt sich dies nachteilig auf die Genauigkeit des ermittelten Durchmesserwertes aus.

Zur Lösung dieses Problems wird eine Kalibrierstation 30 eingesetzt. An dieser wird mit den Sensoren 15, 16 eine Abstandsmessung durchgeführt, wobei die Abmessungen der Kalibrierstation bereits bekannt sind und somit das Ergebnis der Abstandsmessung mit einem vorab bekannten Wert verglichen werden kann. Insbesondere kann die Kalibrierstation 30 eine oder mehrere zylinderförmige Öffnungen mit jeweils bekanntem Durchmesser aufweisen. Über die Abstandsmessungen der Sensoren 15, 16 wird ein Durchmesser berechnet, der mit dem bekannten Durchmesser verglichen wird. Der Zusammenhang dieser Werte wird als Kalibrierung verwendet, das heißt bei der Berechnung eines Durchmessers aus Abstandsmessungen bei untersuchten Hohlzylindern 2 verwendet.

Die Position, in welche die Sensoren 15, 16 für den Kalibriervorgang relativ zum länglichen Körper 12 gebracht werden, wird vorliegend als Referenzmessposition bezeichnet. Die Referenzmessposition ist vorzugsweise gleich der Messposition, die für eine direkt auf den Kalibriervorgang folgende oder direkt dem Kalibriervorgang vorhergehende Überprüfung eines Hohlzylinders 2 verwendet wird.

Daher ist es wünschenswert, wenn die Kalibrierstation 30 mehrere zylindrische Öffnungen unterschiedlicher Durchmesser aufweist, von denen jeweils diejenige für den Kalibriervorgang ausgewählt werden kann, deren Durchmesser dem Durchmesser der darauf oder zuvor überprüften Zylinderbohrung am nächsten kommt.

Die Kalibrierstation 30 kann insbesondere mehrere Ringe 31, 32, 33 aufweisen, welche jeweils einen anderen Durchmesser, das heißt Innendurchmesser, haben. Durch separate Ringe 31, 32, 33 kann ein Ring ergänzt oder ausgetauscht werden, wenn in Zukunft Hohlkörper 1 anderer Abmessungen überprüft werden sollen.

In Figur 1 ist zur besseren Übersicht ein Schnitt durch die Ringe 31 bis 33 gezeigt. Zweckmäßigerweise werden nicht etwa Halbringe, sondern geschlossene Ringe 31 bis 33 verwendet. Auch die Zylinderbohrung 2 im Hohlkörper 1 ist allein zur besseren Übersicht aufgeschnitten gezeigt und ist tatsächlich eine über die gesamte Mantelfläche geschlossene Zylinderbohrung 2.

Die Ringe 31 bis 33 und zugehörige Haltemittel der Kalibrierstation 30 können so gestaltet sein, dass die Ringe 31 bis 33 konzentrisch übereinander gehalten werden können. Dadurch kann eine Bewegung der Messvorrichtung 10 zu dem gewünschten Ring 31, 32 oder 33 in einfacher Weise erfolgen.

Vorteilhafterweise wird durch den Kalibriervorgang erreicht, dass die Relativposition der bewegbaren Sensoren 15, 16 relativ zum länglichen Körper 12 der Messvorrichtung 10 bestimmt und/oder berücksichtigt werden kann. Dies ist besonders vorteilhaft, wenn eine bestimmte Messposition zwar weitgehend reproduzierbar eingenommen werden kann, eine genaue Kenntnis dieser Messposition aber ohne Kalibrierung nicht vorliegt.

Die Erfindung bietet somit eine Prüfanlage und ein Verfahren, mit denen in einfacher Weise ein Innendurchmesser eines Hohlkörpers, insbesondere einer Zylinderbohrung in einem Motorblock, präzise ermittelt werden kann. Dabei können auch unterschiedlich große Innendurchmesser mit hoher Genauigkeit bestimmt werden.

## Patentansprüche

1. Prüfanlage zum Untersuchen eines Hohlkörpers (1), insbesondere einer Zylinderbohrung (2) in einem Motorblock (1), mit
- einer Messvorrichtung (10), welche einen länglichen Körper (12) und mehrere Sensoren (15, 16) umfasst, die mit dem Körper (12) verbunden und zum Durchführen einer Abstandsmessung eingerichtet sind,
- elektronischen Steuermitteln, welche dazu eingerichtet sind, die Messvorrichtung (10) in einen zu untersuchenden Hohlkörper (1) einzufahren und auf Grundlage von Abstandsmessdaten der Sensoren (15, 16) einen Innendurchmesser des Hohlkörpers (1) zu bestimmen,
**dadurch gekennzeichnet,**
**dass** zum Untersuchen von Hohlkörpern (1) unterschiedlicher Durchmesser zumindest ein Anteil der Sensoren (15, 16) als bewegbare Sensoren (15, 16) gestaltet sind, welche optische Sensoren (15, 16) sind und relativ zum länglichen Körper (12) der Messvorrichtung (10) zumindest in radialer Richtung bewegbar sind,
**dass** die elektronischen Steuermittel dazu eingerichtet sind, abhängig von einem zu untersuchenden Hohlkörper (1) eine Messposition der bewegbaren optischen Sensoren (15, 16) relativ zum länglichen Körper (12) zu wählen, dass eine Kalibrierstation (30) vorgesehen ist und
**dass** die elektronischen Steuermittel dazu eingerichtet sind, einen Kalibriervorgang für die bewegbaren Sensoren (15, 16) an der Kalibrierstation (30) durchzuführen, wobei für eine Kalibriermessung die optischen Sensoren (15, 16) auf eine Referenzmessposition relativ zum länglichen Körper (12) bewegbar sind.

2. Prüfanlage nach Anspruch 1,
**dadurch gekennzeichnet,**
**dass** in dem Kalibriervorgang
- die Messvorrichtung (10) zur Kalibrierstation (30) bewegt wird,
- die bewegbaren Sensoren (15, 16) auf eine bestimmte Referenzmessposition relativ zum länglichen Körper (12) bewegt werden,
- mit den bewegbaren Sensoren (15, 16) in der Referenzmessposition eine Referenzmessung durchgeführt wird, mit welcher Entfernungen zur Kalibrierstation (30) gemessen werden,
- ein Zusammenhang zwischen vorab bekannten Abmessungen der Kalibrierstation (30) und Messdaten der Referenzmessung ermittelt und gespeichert wird, und
**dass** die elektronischen Steuermittel dazu eingerichtet sind, bei der Bestimmung eines Innendurchmessers eines zu untersuchenden Hohlkörpers (1) auf Grundlage der Abstandsmessdaten der Sensoren (15, 16) den ermittelten Zusammenhang zu berücksichtigen.

3. Prüfanlage nach Anspruch 1 oder 2,
**dadurch gekennzeichnet,**
**dass** die elektronischen Steuermittel dazu eingerichtet sind, den Kalibriervorgang zumindest immer dann auszuführen, wenn ein nächster Hohlkörper (1) mit einer anderen Messposition untersucht werden soll als ein vorhergehender Hohlkörper (1).

4. Prüfanlage nach einem der Ansprüche 1 bis 3,
**dadurch gekennzeichnet,**
**dass** die Kalibrierstation (30) zumindest einen Referenzring (31, 32, 33) umfasst, in welchen die Messvorrichtung (10) eingefahren wird.

5. Prüfanlage nach Anspruch 4,
**dadurch gekennzeichnet,**
**dass** die Kalibrierstation (30) mehrere Referenzringe (31, 32, 33) umfasst, die sich in ihrem jeweiligen Innendurchmesser unterscheiden.

6. Prüfanlage nach Anspruch 5,
**dadurch gekennzeichnet,**
**dass** die mehreren Referenzringe (31, 32, 33) konzentrisch aufeinander angeordnet sind.

7. Prüfanlage nach Anspruch 5 oder 6,
**dadurch gekennzeichnet,**
**dass** die elektronischen Steuermittel dazu eingerichtet sind, einen der Referenzringe (31, 32, 33) abhängig vom erwarteten Innendurchmesser des zu untersuchenden Hohlkörpers (1) auszuwählen.

8. Prüfanlage nach einem der Ansprüche 1 bis 7,
**dadurch gekennzeichnet,**
**dass** die Referenzmessposition der bewegbaren Sensoren (15, 16) gleich einer Messposition ist, in welcher nach Durchführen des Kalibriervorgangs ein Hohlkörper (1) untersucht wird.

9. Prüfanlage nach einem der Ansprüche 1 bis 8,
**dadurch gekennzeichnet,**
**dass** die bewegbaren Sensoren (15, 16) in radialer Richtung zum länglichen Körper (12) verstellbar sind.

10. Prüfanlage nach einem der Ansprüche 1 bis 9,
**dadurch gekennzeichnet,**
**dass** die bewegbaren Sensoren (15, 16) mindestens drei Sensoren (15, 16) umfassen, deren Messrichtung in Azimutalrichtung zueinander versetzt ist.

11. Prüfanlage nach einem der Ansprüche 1 bis 10,
**dadurch gekennzeichnet,**
**dass** die elektronischen Steuermittel dazu eingerichtet sind, unter Berücksichtigung eines erwarteten Innendurchmessers des zu untersuchenden Hohlkörpers (1) eine Messposition festzulegen, auf welche die bewegbaren Sensoren (15, 16) für eine Abstandsmessung bewegt werden.

12. Beschichtungsanlage zum Beschichten einer Innenwandung (3) eines Hohlkörpers (1), insbesondere einer Lauffläche (3) einer Zylinderbohrung (2) in einem Motorblock (1), mit
- mindestens einer drehbaren Beschichtungslanze, durch welche ein Metallplasmastrahl zum Beschichten der Innenwandung (3) erzeugbar ist, und
- einer Prüfanlage nach einem der Ansprüche 1 bis 11.

13. Beschichtungsanlage nach Anspruch 12,
**dadurch gekennzeichnet,**
**dass** die elektronischen Steuermittel dazu eingerichtet sind,
- mit Hilfe der Messvorrichtung (10) einen Innendurchmesser des Hohlkörpers (1) zu ermitteln,
- sodann mit der Beschichtungslanze eine Beschichtung auf eine Innenwandung des Hohlkörpers (1) aufzutragen,
- darauf mit Hilfe der Messvorrichtung (10) einen Innendurchmesser des nun beschichteten Hohlkörpers (1) zu ermitteln,
- eine Dicke der Beschichtung durch Vergleichen der ermittelten Innendurchmesser vor und nach Auftragen der Beschichtung zu berechnen.

14. Verfahren zum Untersuchen eines Hohlkörpers (1), insbesondere einer Zylinderbohrung (2) in einem Motorblock (1),
wobei eine Messvorrichtung (10) vorgesehen ist, welche einen länglichen Körper (12) und mehrere Sensoren (15, 16) umfasst, die mit dem Körper (12) verbunden und zum Durchführen einer Abstandsmessung eingerichtet sind,
wobei die Messvorrichtung (10) in einen zu untersuchenden Hohlkörper (1) eingefahren wird, dort eine Abstandsmessung zu einer Innenwandung (3) des Hohlkörpers (1) durchführt und auf Grundlage von Abstandsmessdaten der Sensoren (15, 16) ein Innendurchmesser des Hohlkörpers (1) bestimmt wird,
**dadurch gekennzeichnet,**
**dass** zum Untersuchen von Hohlkörpern (1) unterschiedlicher Durchmesser zumindest ein Anteil der Sensoren (15, 16) als bewegbare Sensoren (15, 16) gestaltet sind, welche optische Sensoren (15, 16) sind und relativ zum länglichen Körper (12) der Messvorrichtung (10) zumindest in radialer Richtung bewegbar sind,
**dass** abhängig von einem zu untersuchenden Hohlkörper (1) eine Messposition der bewegbaren Sensoren (15, 16) relativ zum länglichen Körper (12) gewählt wird und
**dass** ein Kalibriervorgang für die bewegbaren Sensoren (15, 16) an einer Kalibrierstation (30) durchgeführt wird, wobei für eine Kalibriermessung die optischen Sensoren (15, 16) auf eine Referenzmessposition relativ zum länglichen Körper (12) bewegt werden.

15. Verfahren nach Anspruch 14,
**dadurch gekennzeichnet,**
**dass** die bewegbaren Sensoren (15, 16) für eine Überprüfung einer Innenwandung des Hohlkörpers (1) von dem länglichen Körper (12) weg bewegt werden, wenn die Messvorrichtung (10) in den zu untersuchenden Hohlkörper (1) eingefahren ist, und
**dass** die bewegbaren Sensoren (15, 16) in Richtung des länglichen Körpers (12) eingezogen sind, während die Messvorrichtung (10) in einen zu untersuchenden Hohlkörper (1) eingefahren oder aus einem zu untersuchenden Hohlkörper (1) herausgefahren wird.

## Claims

1. Test system for examining a hollow body (1), in particular a cylinder bore (2) in an engine block (1), with
- a measuring device (10) comprising an elongate body (12) and several sensors (15, 16) which are connected to the body (12) and adapted to carry out a distance measurement,
- electronic control means which are adapted to move the measuring device (10) into a hollow body (1) to be examined and to determine an internal diameter of the hollow body (1) on the basis of distance measurement data of the sensors (15, 16),
**characterized in that**
for the examination of hollow bodies (1) of different diameters at least a part of the sensors (15, 16) are designed as movable sensors (15, 16) which are optical sensors (15, 16) and movable relative to the elongate body (12) of the measuring device (10) at least in the radial direction,
**in that** depending on a hollow body (1) to be examined the electronic control means are adapted to select a measuring position of the movable optical sensors (15, 16) relative to the elongate body (12),
**in that** a calibrating station (30) is provided and
**in that** the electronic control means are adapted to carry out a calibration process for the movable sensors (15, 16) on the calibrating station (30), wherein for a calibration measurement the optical sensors (15, 16) can be moved to a reference measuring position relative to the elongate body (12).

2. Test system according to claim 1,
**characterized in that**
in the calibration process
- the measuring device (10) is moved to the calibrating station (30),
- the movable sensors (15, 16) are moved to a specific reference measuring position relative to the elongate body (12),
- with the movable sensors (15, 16) in the reference measuring position a reference measurement is carried out, with which distances to the calibrating station (30) are measured,
- a relation between previously known dimensions of the calibrating station (30) and measurement data of the reference measurement is ascertained and stored and
**in that** the electronic control means are adapted to take the ascertained relation into account in the determination of an internal diameter of a hollow body (1) to be examined on the basis of the distance measurement data of the sensors (15, 16).

3. Test system according to claim 1 or 2,
**characterized in that**
the electronic control means are adapted to carry out the calibration process at least every time a next hollow body (1) with a measuring position different to a previous hollow body (1) is to be examined.

4. Test system according to any one of claims 1 to 3,
**characterized in that**
the calibrating station (30) comprises at least one reference ring (31, 32, 33), into which the measuring device (10) is moved.

5. Test system according to claim 4,
**characterized in that**
the calibrating station (30) comprises several reference rings (31, 32, 33) which differ in their respective internal diameter.

6. Test system according to claim 5,
**characterized in that**
the several reference rings (31, 32, 33) are arranged concentrically on top of each other.

7. Test system according to claim 5 or 6,
**characterized in that**
the electronic control means are adapted to select one of the reference rings (31, 32, 33) depending on the expected internal diameter of the hollow body (1) to be examined.

8. Test system according to any one of claims 1 to 7,
**characterized in that**
the reference measuring position of the movable sensors (15, 16) is the same as a measuring position, in which a hollow body (1) is examined after the calibration process has been carried out.

9. Test system according to any one of claims 1 to 8,
**characterized in that**
the movable sensors (15, 16) are adjustable in the radial direction with respect to the elongate body (12).

10. Test system according to any one of claims 1 to 9,
**characterized in that**
the movable sensors (15, 16) comprise at least three sensors (15, 16), the measuring direction of which is offset to each other in the azimuthal direction.

11. Test system according to any one of claims 1 to 10,
**characterized in that**
the electronic control means, by taking an expected internal diameter of the hollow body (1) to be examined into account, are adapted to set a measuring position, to which the movable sensors (15, 16) are moved for a distance measurement.

12. Coating system for coating an inner wall (3) of a hollow body (1), in particular a running surface (3) of a cylinder bore (2) in an engine block (1), with
- at least one rotatable coating lance, by which a metal plasma jet for coating the inner wall (3) can be generated, and
- a test system according to any one of claims 1 to 11.

13. Coating system according to claim 12,
**characterized in that**
the electronic control means are adapted
- to ascertain an internal diameter of the hollow body (1) by means of the measuring device (10),
- to then apply a coating with the coating lance onto an inner wall of the hollow body (1),
- to subsequently ascertain an internal diameter of the hollow body (1) now coated by means of the measuring device (10),
- to calculate a thickness of the coating by comparing the internal diameters ascertained before and after application of the coating.

14. Method for examining a hollow body (1), in particular a cylinder bore (2) in an engine block (1),
wherein a measuring device (10) is provided which comprises an elongate body (12) and several sensors (15, 16) which are connected to the body (12) and adapted to carry out a distance measurement,
wherein the measuring device (10) is moved into a hollow body (1) to be examined, carries out a distance measurement to an inner wall (3) of the hollow body (1) there and on the basis of distance measurement data of the sensors (15, 16) an internal diameter of the hollow body (1) is determined,
**characterized in that**
for the examination of hollow bodies (1) of different diameters at least a part of the sensors (15, 16) are designed as movable sensors (15, 16) which are optical sensors (15, 16) and movable relative to the elongate body (12) of the measuring device (10) at least in the radial direction,
**in that** depending on a hollow body (1) to be examined a measuring position of the movable sensors (15, 16) relative to the elongate body (12) is selected and
**in that** a calibration process for the movable sensors (15, 16) is carried out on a calibrating station (30), wherein for a calibration measurement the optical sensors (15, 16) are moved to a reference measuring position relative to the elongate body (12).

15. Method according to claim 14,
**characterized in that**
for testing of an inner wall of the hollow body (1) the movable sensors (15, 16) are moved away from the elongate body (12) when the measuring device (10) has moved into the hollow body (1) to be examined, and
**in that** the movable sensors (15, 16) are retracted in the direction of the elongate body (12) while the measuring device (10) is being moved into a hollow body (1) to be examined or moved out of a hollow body (1) to be examined.

## Revendications

1. Installation de contrôle pour l'analyse d'un corps creux (1), en particulier d'un alésage de cylindre (2) dans un bloc moteur (1), avec
- un dispositif de mesure (10) entourant un corps allongé (12) et plusieurs capteurs (15, 16) qui sont reliés au corps (12) et agencés pour réaliser une mesure de la distance,
- des moyens de commande électroniques agencés pour introduire le dispositif de mesure (10) dans un corps creux (1) à analyser et pour déterminer un diamètre du corps creux (1) sur la base de données de mesure de la distance des capteurs (15, 16),
**caractérisée en ce que**
pour l'analyse de corps creux (1) de diamètres différents, au moins une partie des capteurs (15, 16) sont conçus en tant que capteurs déplaçables (15, 16), lesquels sont des capteurs optiques (15, 16) et sont déplaçables relativement au corps allongé (12) du dispositif de mesure (10) tout au moins dans une direction radiale,
les dispositifs de commande électroniques sont agencés pour choisir, indépendamment d'un corps creux (1) à analyser, une position de mesure des capteurs optiques déplaçables (15, 16) relativement au corps allongé (12),
une station de calibrage (30) est prévue et
les moyens de commande électroniques sont agencés pour exécuter une procédure de calibrage pour les capteurs déplaçables (15, 16) sur la station de calibrage (30), tandis que, pour une mesure de calibrage, les capteurs optiques (15, 16) sont déplaçables sur une position de référence relativement au corps allongé (12).

2. Installation de contrôle selon la revendication 1,
**caractérisée en ce que**
dans le cadre de la procédure de calibrage
- le dispositif de mesure (10) est déplacé vers la station de calibrage (30),
- les capteurs déplaçables (15, 16) sont déplacés sur une position de mesure de référence déterminée, relativement au corps allongé (12),
- avec les capteurs déplaçables (15, 16) dans la position de mesure de référence, une mesure de référence est exécutée, avec laquelle des distances par rapport à la station de calibrage (30) sont mesurées,
- une relation entre des mesures déjà connues de la station de calibrage (30) et des données de mesure de la mesure de référence est déterminée et enregistrée, et
les moyens de commande électroniques sont agencés pour prendre en compte, dans le cadre de la détermination d'un diamètre interne d'un corps creux (1) à analyser, sur la base des données de mesures de distance des capteurs (15, 16), la relation déterminée.

3. Installation de contrôle selon la revendication 1 ou 2,
**caractérisée en ce que**
les moyens de commande électroniques sont agencés pour exécuter la procédure de calibrage au moins toujours lorsqu'un prochain corps creux (1) doit être analysé avec une autre position de mesure que celle d'un corps creux (1) précédent.

4. Installation de contrôle selon une des revendications 1 à 3,
**caractérisé en ce que**
la station de calibrage (30) entoure au moins un anneau de référence (31, 32, 33) dans laquelle le dispositif de mesure est introduit.

5. Installation de contrôle selon la revendication 4,
**caractérisée en ce que**
la station de calibrage (30) entoure une pluralité d'anneaux de référence (31, 32, 33) qui se distinguent au niveau de chacun de leur diamètres internes.

6. Installation de contrôle selon la revendication 5,
**caractérisée en ce que**
la pluralité d'anneaux de référence (31, 32, 33) sont agencés de manière concentrique les uns sur les autres,

7. Installation de contrôle selon les revendications 5 ou 6,
**caractérisée en ce que**
les moyens de commande électroniques sont agencés de sorte que l'un des anneaux de référence (31, 32, 33) puisse être choisi indépendamment du diamètre interne escompté du corps creux (1) à analyser.

8. Installation de contrôle selon une des revendications 1 à 7,
**caractérisée en ce que**
la position de mesure de référence des capteurs déplaçables (15, 16) équivaut à une position de mesure, dans laquelle un corps creux (1) est analysé après l'exécution de la procédure de calibrage.

9. Installation de contrôle selon une des revendication 1 à 8,
**caractérisée en ce que**
les capteurs déplaçables (15, 16) peuvent être réglés dans une direction radiale par rapport au corps allongé (12).

10. Installation de contrôle selon une des revendications 1 à 9,
**caractérisée en ce que**
les capteurs déplaçables (15, 16) entourent au moins trois capteurs (15, 16) dont les directions de mesure sont décalées dans une direction azimutale les unes par rapport aux autres.

11. Installation selon une des revendications 1 à 10,
**caractérisée en ce que**
les moyens de commande électroniques sont agencés de sorte à fixer une position de mesure, en prenant en compte un diamètre interne escompté du corps creux (1) à analyser, sur laquelle les capteurs déplaçables (15, 16) sont déplacés pour une mesure de distance.

12. Installation de revêtement pour enduire une paroi interne (3) d'un corps creux (1), en particulier d'une bande de roulement (3) d'un alésage cylindrique (2) dans un bloc moteur (1), avec
- au moins une lance de revêtement pivotante au travers de laquelle un jet de plasma métallique peut être produit en vue du revêtement de la paroi interne (3), et
- une installation de contrôle selon une des revendications 1 à 11.

13. Installation de revêtement selon la revendication 12,
**caractérisée en ce que**
les moyens de commande électroniques sont agencés
- pour déterminer un diamètre interne du corps creux (1) à l'aide du dispositif de mesure (1),
- pour ensuite enduire, avec la lance de revêtement, un revêtement sur une paroi interne du corps creux (1),
- pour ensuite déterminer, à l'aide du dispositif de mesure (10), un diamètre interne du corps creux (1) désormais enduit,
- pour calculer une épaisseur du revêtement en comparant le diamètre interne avant et après l'application du revêtement.

14. Procédure pour analyser un corps creux (1), en particulier un alésage cylindrique (2) dans un bloc moteur (1),
tandis qu'un dispositif de mesure (10) est prévu, lequel entoure un corps allongé (12) et plusieurs capteurs (15, 16), qui sont liés au corps (12) et agencés pour exécuter une mesure de distance,
tandis que le dispositif de mesure (10) est introduit dans un corps creux (1) à analyser, où il exécute une mesure de distance par rapport à une paroi interne (3) du corps creux (1) et qu'un diamètre interne du corps creux (1) est déterminé sur la base de données de mesure de distance des capteurs (15, 16), **caractérisée en ce que**
pour l'analyse de corps creux (1) de différents diamètres, au moins une partie des capteurs (15, 16) sont conçus en tant que capteurs déplaçables (15, 16), lesquels sont des capteurs optiques (15, 16) et sont déplaçables relativement au corps allongé (12) du dispositif de mesure (10) au moins dans une direction radiale,
indépendamment d'un corps creux (1) à analyser, une position de mesure des capteurs déplaçables (15, 16) est choisie relativement au corps allongé (12) et une procédure de calibrage est exécutée pour les capteurs déplaçables (15, 16) au niveau d'une station de calibrage (30), tandis que, pour une mesure de calibrage, les capteurs optiques (15, 16) sont déplacés sur une position de mesure de référence relativement au corps allongé (12).

15. Procédure selon la revendication 14,
**caractérisée en ce que**
les capteurs déplaçables (15, 16) peuvent être éloignés du corps allongé (12) pour une analyse d'une paroi interne du corps creux (1), lorsque le dispositif de mesure (10) est introduit dans le corps creux (1) à analyser, et
les capteurs déplaçables (15, 16) sont rétractés en direction du corps allongé (12), tandis que le dispositif de mesure (10) est introduit dans un corps creux (1) à analyser ou retiré d'un corps creux (1) à analyser.
